(19) Europäisches Patentamt
European Patent Office
Office européen des brevets

(11) **EP 3 327 952 A1**

(12) **EUROPEAN PATENT APPLICATION**
published in accordance with Art. 153(4) EPC

(43) Date of publication:
**30.05.2018 Bulletin 2018/22**

(51) Int Cl.:
*H04B 7/10* (2017.01)       *H04W 16/28* (2009.01)
*H04W 64/00* (2009.01)

(21) Application number: **16827428.0**

(22) Date of filing: **15.07.2016**

(86) International application number:
**PCT/JP2016/003340**

(87) International publication number:
**WO 2017/013861 (26.01.2017 Gazette 2017/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **17.07.2015 JP 2015142795**

(71) Applicant: **NEC Corporation
Tokyo 108-8001 (JP)**

(72) Inventor: **ANDO, Takeshi
Tokyo 108-8001 (JP)**

(74) Representative: **MacDougall, Alan John Shaw et al
Mathys & Squire LLP
The Shard
32 London Bridge Street
London SE1 9SG (GB)**

(54) **BASE STATION AND METHOD**

(57) In order to solve the problem that when transmitting a signal using a beam, a common base station exclusively for transmission cannot deliver the signal to a terminal, this base station is provided with: an acquisition means for acquiring positional information indicating the position of a terminal to be connected thereto; a calculation means for calculating the direction from the device itself to the terminal on the basis of the positional information indicating the position of the terminal, and predetermined positional information indicating the position of the device itself; and a transmission means for emitting a beam having a rectilinear property in the aforementioned direction and transmitting an input signal using the beam.

Fig.5

**Description**

[Technical Field]

The present invention relates to a base station and a method, and in particular, to a base station and a method for emitting a beam.

[Background Art]

In general, a base station for emitting a beam is known. The beam is a radio wave having directivity. The base station which emits the beam estimates an arrival direction of a signal (that is an uplink signal) received from a communication destination terminal and emits the beam in the estimated arrival direction (in other words, in the direction toward the communication destination terminal). In this case, the above-mentioned base station estimates the arrival direction by using a well-known arrival direction estimation method, controls the beam so that the beam is emitted in the estimated direction by using a well-known beam forming technology, and emits the beam. The above-mentioned base station emits the beam having directivity and whereby, a terminal other than the communication destination terminal can be prevented from being interfered by this beam. Further, when a downlink signal is inputted from a higher-level device, the above-mentioned base station transmits the inputted downlink signal to the terminal by the beam. In patent literatures 1 and 2, there is disclosed a device which estimates the arrival direction of the uplink signal and emits the beam in the estimated arrival direction like the above-mentioned base station.

Incidentally, in recent years, for the purpose of the expansion of a downlink communication capacity and the improvement of throughput, a mobile communication system in which a base station (hereinafter, referred to as a "base station exclusive for transmission") for exclusively transmitting the downlink signal is arranged in an area of the existing base station is discussed. The base station exclusive for transmission does not perform the reception of the uplink signal and performs the transmission of the downlink signal by using a high frequency band of 10 GHz or more. In a white paper of non-patent literature 1, there is described a mobile communication system in which a small cell base station for exclusively performing the transmission of the downlink signal by using the high frequency band of 10 GHz or more is arranged in an area of the existing base station. A radio wave in a high frequency band of 10 GHz or more has a property of strongly going straight ahead and is easy to attenuate. However, when using this radio wave, a large transmission capacity can be realized and the base station exclusive for transmission can transmit a large volume downlink signal at high speed.

As a technology not directly related to that for the base station, a common technology in which a position of a terminal is calculated by three point positioning is also known. (refer to non-patent literature 2)

[Citation List]

[Patent Literature]

[PTL 1] Japanese Patent Application Laid-Open No. 2001-127699
[PTL 2] Japanese Patent Application Laid-Open No. 2015-109692

[Non Patent Literature]

[NPL 1] NTT DoCoMo Inc., "DoCoMo 5G white paper", page 7 to page 9, [online], September 2014, [searched on 1st July 2015], internet <URL: https://www.nttdocomo.co.jp/binary/pdf/corporate/technology/whitepaper_5g/DOCOMO_5G_White_PaperJP_20141006.pdf>
[NPL 2] Independent Administrative Agency National Institute of Information and Communications Technology, "Development of highly accurate indoor positioning system using UWB", [online], May 26th 2014, [searched on 1st July 2015], internet <URL: http://www.nict.go.jp/press/2014/05/26-1.html>

# EP 3 327 952 A1

[Summary of Invention]

[Technical Problem]

However, a common base station exclusive for transmission including a small cell base station described in non-patent literature 1 mentioned above have a problem that when the base station transmits the downlink signal by using the beam, the downlink signal cannot be delivered to the terminal.

This is because the common base station exclusive for transmission cannot estimate the arrival direction of the uplink signal (direction toward the terminal) because it does not receive the uplink signal. Because the common base station exclusive for transmission cannot estimate the arrival direction (direction toward the terminal), the common base station exclusive for transmission cannot emit the beam in the direction toward the terminal. As a result, there is a problem that when the common base station exclusive for transmission transmits the signal by using the beam, it cannot deliver the signal to the terminal.

Further, in order to solve the above-mentioned problem, the common base station exclusive for transmission may acquire the arrival direction of the uplink signal that is estimated by the existing base station located near the common base station exclusive for transmission (from the existing base station) and emit the beam in the arrival direction. However, the arrival direction estimated by the existing base station is not necessarily the same as the direction toward the terminal from the common base station exclusive for transmission. This is because the existing base station and the base station exclusive for transmission are located in different places and the arrival direction (the direction toward the terminal) estimated by the existing base station is not the same as the direction toward the terminal from the base station exclusive for transmission. Further, because the uplink signal received by the existing base station is a signal in a low frequency band such as a 2 GHz band or the like, there may be a case in which the uplink signal is delivered after it is diffracted by an obstacle or the like. Therefore, the estimated arrival direction is not necessarily the same as the direction toward the terminal from the base station exclusive for transmission. Because the common base station exclusive for transmission cannot find out the direction toward the terminal, it cannot emit the beam in the direction toward the terminal. Accordingly, there still remains the problem that the common base station exclusive for transmission cannot deliver the signal to the terminal.

The present invention aims to provide a base station and a method that solves the above-described problems.

[Solution to Problem]

To achieve the above-described object, a base station of the present invention comprises acquisition means for acquiring position information indicating a position of a connected terminal, calculation means for calculating a direction toward the terminal from an own device based on the position information indicating the position of the terminal and predetermined position information indicating the position of the own device, and transmission means for emitting a beam having a property of going straight ahead in the direction and transmitting an inputted signal by the beam.

To achieve the above-described object, a method of the present invention comprises acquiring position information indicating a position of a connected terminal, calculating a direction toward the terminal from an own device based on the position information indicating the position of the terminal and predetermined position information indicating the position of the own device, and emitting a beam having a property of going straight ahead in the direction and transmitting an inputted signal by the beam.

[Advantageous Effects of Invention]

According to the present invention, when the base station transmits a signal by using a beam, the base station can deliver the signal to the terminal.

[Brief Description of Drawings]

[Fig. 1] Fig. 1 is a figure showing an example of a configuration of a mobile communication system including a base station according to a first example embodiment of the present invention.
[Fig. 2] Fig. 2 is a figure showing an example of a configuration of a base station according to a first example embodiment of the present invention and an example of a configuration of a positioning system connected to the base station.
[Fig. 3] Fig. 3 is a figure for explaining an antenna included in a base station according to a first example embodiment of the present invention.

[Fig. 4] Fig. 4 is a figure for explaining operation of a base station according to a first example embodiment of the present invention.

[Fig. 5] Fig. 5 is a figure showing an example of a configuration of a base station according to a second example embodiment of the present invention.

[Description of Embodiments]

Next, an example embodiment of the present invention will be described in detail with reference to the drawings.

<<First example embodiment>>

[Summary]

A base station according to a first example embodiment of the present invention is a base station exclusive for transmission. The base station according to this example embodiment does not perform reception of an uplink signal and exclusively performs transmission of a downlink signal. The base station according to this example embodiment is connected to a well-known positioning system which measures the position of a terminal.

Because the base station according to this example embodiment cannot estimate a direction toward the terminal on the basis of the uplink signal, instead of estimation, the base station acquires position information indicating the position of the terminal from the positioning system and calculates the direction toward the terminal from the acquired position information indicating the position of the terminal and predetermined position information indicating the position of the own device. The base station according to this example embodiment emits a beam in the calculated direction toward the terminal. Because the base station according to this example embodiment calculates the direction toward the terminal, the base station can emit the beam in the direction toward the terminal and can deliver the downlink signal to the terminal.

[Explanation of configuration]

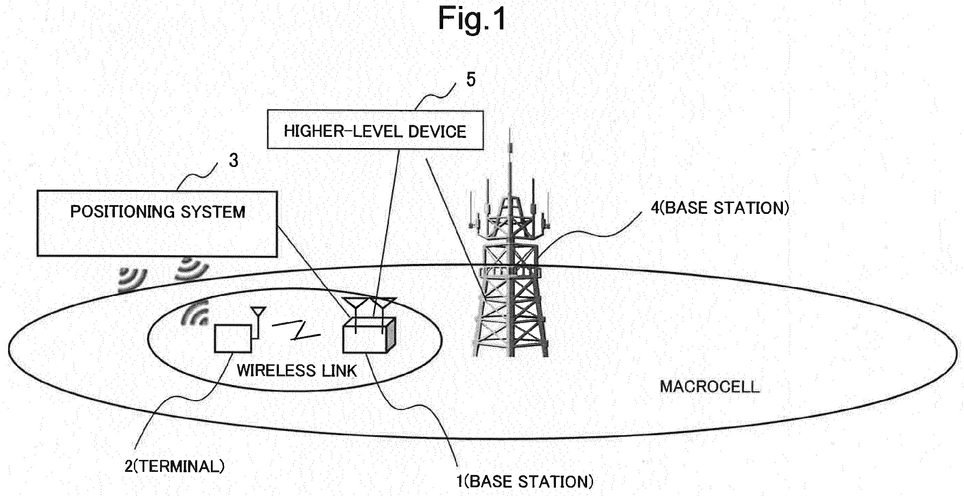

Fig. 1 is a figure showing an example of a configuration of a mobile communication system including the base station according to the first example embodiment of the present invention.

(1) About a system including the base station according to the first example embodiment of the present invention

The base station according to this example embodiment is included in the mobile communication system. As shown in Fig. 1, the mobile communication system includes a base station 1 according to this example embodiment, a terminal 2, a positioning system 3, an existing base station 4, and a higher-level device 5.

The base station 1 according to this example embodiment is arranged in a cell of the existing base station 4, in other words, in a macrocell.

The higher-level device 5 is a common core network device in the mobile communication system. For example, the higher-level device 5 is an MME (Mobility Management Entity).

The base station 1 according to this example embodiment is connected to the positioning system 3 and the higher-level device 5 via a LAN (Local Area Network) cable. Further, the base station 1 according to this example embodiment is connected to the terminal 2 via a wireless link. The existing base station 4 is also connected to the higher-level device 5 via the LAN cable.

The function of the positioning system 3 and each device will be described below. First, the function of the positioning system 3 will be described.

(2) Function of the positioning system 3

(2-1) Positioning function (summary)

The positioning system 3 measures the position of the terminal 2 by three point positioning like a common positioning system. The positioning system 3 stores the measured coordinates of the position of the terminal 2 as position information of the terminal 2.

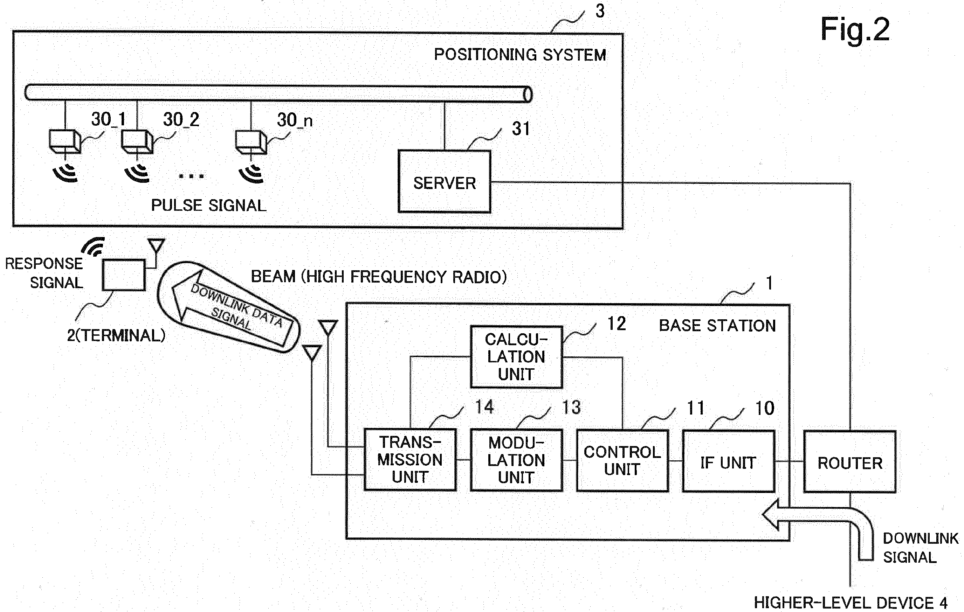

The configuration and function of the positioning system 3 for realizing the positioning function described above will be described in detail in the following section "(2-2) positioning function (detail)". Fig. 2 is a figure showing an example of the configuration of the base station according to this example embodiment and an example of the configuration of the location positioning system 3 connected to the base station.

(2-2) Positioning function (detail)

First, as shown in Fig. 2, the positioning system 3 includes three or more fixed stations 30_1, 30_2, ..., and 30_n (n is the number of the fixed stations included in the positioning system 3 and n is equal to or more than 3) and a server 31. Each of the fixed stations 30_1, 30_2, ..., and 30_n transmits a pulse signal and measures a time taken until a response signal responding to the pulse signal comes back from the terminal 2. The pulse signal and the response signal may be wireless signals in the UWB (Ultra Wide Band) shown in non-patent literature 2. Each of the fixed stations 30_1, 30 2, ..., and 30_n calculates a distance between the terminal 2 and the own fixed station by calculating the product of one half of the measured time and the velocity of light. The server 31 calculates the position of the terminal 2 by well-known three point positioning on the basis of the distance calculated by each of the fixed stations 30_1, 30_2, ..., and 30_n. Specifically, map data (map data is in vector format of vector type) in which a predetermined reference position is used as the point of origin and a position is represented by a combination of X and Y coordinate values is set to the server 31 in advance, and positional coordinates of each of the fixed stations 30_1, 30 2, ..., and 30_n are also set to the map data. For each of the positional coordinates of the fixed stations, the server 31 draws a circle whose center is the positional coordinates and whose radius is equal to the distance calculated by the fixed station. And the server 31 calculates the coordinate of the intersection point of three or more circles as the position of the terminal 2. The calculated position of the terminal 2 is represented by the X and Y-coordinate values and hereinafter, it is described as "X2, Y2". The server 31 stores the calculated positional coordinates (X2, Y2) of the terminal 2 as the position information of the terminal 2. In the above-mentioned map data, an X axis and a Y axis are perpendicular to each other.

The fixed stations 30_1, 30_2, ..., and 30_n and the server 31 activate the above-mentioned positioning function and measure the position of the terminal 2 at fixed time intervals, and the server 31 updates the stored position information of the terminal 2.

(2-3) Function for transmitting position information to the terminal 2

The positioning system 3 transmits the stored positional coordinates (X2, Y2) of the terminal 2 to the terminal 2 as a wireless signal.

Specifically, whenever the server 31 stores the positional coordinates (X2, Y2) of the terminal 2, the server 31 outputs the positional coordinates (X2, Y2) to the fixed stations 30_1, 30_2, ..., and 30_n. The fixed station 30_1, 30_2, ..., and 30_n convert the inputted positional coordinates (X2, Y2) of the terminal 2 into a wireless signal in the UWB and transmit it to the terminal 2.

(2-4) Response function

When the server 31 of the positioning system 3 receives a packet for inquiring about the position information from the base station 1, the server 31 includes the stored position information (X2, Y2) of the terminal 2 in a response packet and transmits the response packet to the base station 1. The response packet is a packet addressed to the base station 1.

(3) Function of the terminal 2

(3-1) Function for communicating with the positioning system 3

When the terminal 2 receives the pulse signal, the terminal 2 transmits the response signal like the terminal of the positioning system described in non-patent literature 2. Further, the terminal 2 has a well-known display function for displaying the extracted positional coordinates on a screen when the terminal 2 extracts the positional coordinates from the received wireless signal.

(3-2) Function for communicating with the base station

The terminal 2 has a function to perform wireless communication with the base station 4 in a frequency band of 2 GHz band like the terminal of a common mobile communication system. The terminal 2 further has a function to perform wireless communication with the base station 1 in a frequency band of 10 GHz band.

(4) Function of the base station 1

(4-1) Storage function

The position information of the base station 1 is set to the base station 1 according to this example embodiment by a person for installation in advance. The person who installs the base station 1 sets the positional coordinates of the base station 1 in the map data set to the server 31. The person who installs the base station 1 may set the positional coordinates displayed on the screen of the terminal 2 by a display function to the base station 1 while holding the terminal 2 at the installation place of the base station 1. The base station 1 stores the set positional coordinates in a memory as the position information of the base station 1. Hereinafter, the position (coordinate) of the base station 1 is described as "X1, Y1".

(4-2) Function for inquiry

When the base station 1 according to this example embodiment receives a call setup message instructing the base station 1 to communicate with the terminal 2 from the higher-level device 5, the base station 1 transmits a packet for inquiring about the position information (of the terminal 2) to the server of the positioning system 3.

(4-3) Function for calculating a direction

After the base station 1 according to this example embodiment transmits the packet for inquiring about the position information, the base station 1 receives a response packet from the server 31 of the positioning system 3. The base station 1 according to this example embodiment extracts the position information of the terminal 2 from the received response packet and calculates the direction toward the terminal 2 on the basis of the extracted position information of the terminal 2 and the stored position information of the own device. A method for calculating the direction toward the terminal 2 will be described in detail in the aftermentioned [Explanation of operation].

(4-4) Beam forming function

The base station 1 according to this example embodiment emits the beam in the calculated direction toward the terminal by using the well-known beam forming technology like a common base station which emits the beam. The beam is a beam in 10 GHz band which has a property of going straight ahead.

(4-5) Downlink signal transmission function

When the downlink signal is inputted, the base station 1 according to this example embodiment transmits the inputted downlink signal by the emitted beam (the radio wave in 10 GHz band) like the common base station.

(5) About the base station 4 and the higher-level device 5

The base station 4 is the common base station. The base station 4 communicates with the terminal 2 in a frequency band of 2 GHz band.
The higher-level device 5 is a common MME. When the higher-level device 5 communicates with the terminal 2, the higher-level device 5 notifies the base station 1 of the call setup message.

(6) Configuration of the base station 1

(6-1) Configuration of the base station 1

In order to realize the above-mentioned section "(4) Function of the base station 1", as shown in Fig. 2, the base station 1 includes an IF (Interface) unit 10, a control unit 11, a calculation unit 12, a modulation unit 13, and a transmission unit 14.
The control unit 11 is connected to the interface unit 10, the calculation unit 12, and the modulation unit 13. The transmission unit 14 is connected to the calculation unit 12 and the modulation unit 13.

(6-2) About an antenna included in the transmission unit 14

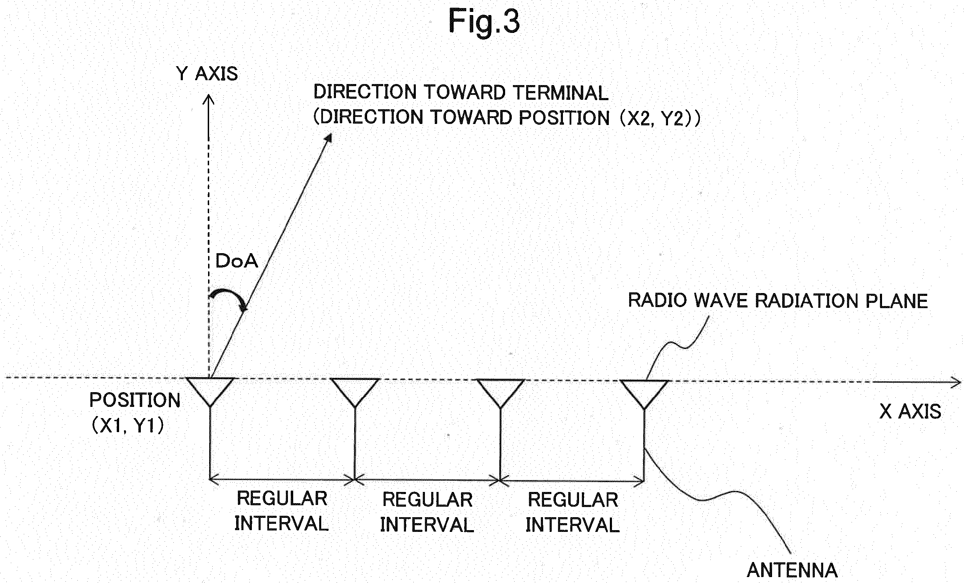

Fig. 3 is a figure for explaining an antenna included in the base station 1 (that is, in the transmission unit 14 of the base station 1) according to this example embodiment.

The transmission unit 14 of the base station 1 is equipped with a plurality of antennas. In Fig. 2, an example in which the transmission unit 14 is equipped with two antennas is shown. However, the transmission unit 14 may be equipped with two or more (for example, four) antennas.

The antenna included in the transmission unit 14 is an array antenna. As shown in Fig. 3, the antennas are arranged in a linear fashion and at regular intervals by the person who installs the base station 1. Further, each antenna is arranged in parallel to the X axis direction of the map data set to the server 31. It is in order to enable the transmission unit 14 to control the direction of the beam. Further, the person who installs the base station 1 sets each antenna so that a radio wave radiation plane of the antenna is directed to the Y axis direction. The person who installs the base station 1 can confirm the X axis direction and the Y axis direction by checking a direction where only an X-coordinate value increases and a direction where only a Y-coordinate value increases that are displayed by a display function of the terminal 2.

(6-3) Function of each unit of which the base station 1 is composed

(6-3-1) Function of the IF unit 10

The IF unit 10 transmits the packet (the packet for inquiring about the position information) inputted from the control unit 11 to a LAN cable. Further, the IF unit 10 receives the response packet, the call setup message, and the downlink signal from the LAN cable and outputs the received packet to the control unit 11. The response packet, the call setup message, and the downlink signal are the packets addressed to the base station 1.

(6-3-2) Function of the control unit 11

The control unit 11 is a function unit for realizing "Function for inquiry" as in the section (4-2). Specifically, when the call setup message is inputted, the control unit 11 outputs the packet for inquiring about the position information to the IF unit 10.

Further, the control unit 11 has a function for acquiring and transferring the position information of the terminal 2. Namely, when the response packet is inputted from the IF unit 10, the control unit 11 extracts the position information of the terminal 2 from the inputted response packet and outputs the extracted position information of the terminal 2 to the calculation unit 12 as an electric signal. Further, when the downlink signal is inputted from the IF unit 10, the control unit 11 outputs the inputted downlink signal to the modulation unit 13 as an electric signal.

(6-3-3) Function of the modulation unit 13

The modulation unit 13 is a common modulation circuit, extracts the downlink signal from the inputted electric signal, and performs a well-known modulation process to the extracted downlink signal. The modulation process may be a process for converting the extracted downlink signal into a 64QAM (Quadrature Amplitude Modulation) modulated signal. The modulation unit 13 outputs the modulated signal to the transmission unit 14 as an electric signal.

(6-3-4) Function of the calculation unit 12

The calculation unit 12 is a function unit for realizing "Storage function" as in the section (4-1). Specifically, the calculation unit 12 stores the position information (X1, Y1) of the base station 1 that is set by the person who installs the base station 1.

Further, the calculation unit 12 is also a function unit for realizing "Function for calculating a direction" as in the section (4-3).

Specifically, the calculation unit 12 calculates the direction toward the terminal 2 on the basis of the position information (X2, Y2) of the terminal 2 inputted from the control unit 11 as the electric signal and the stored position information (X1, Y1) of the base station 1. A specific method for calculating the direction toward the terminal 2 will be described in detail in the aftermentioned [Explanation of operation].

The calculation unit 12 outputs the calculated direction toward the terminal 2 to the transmission unit 14 as an electric signal.

(6-3-5) Function of the transmission unit 14

The transmission unit 14 is a function unit for realizing "Beam forming function" as in the section (4-4). Specifically, when the electric signal is inputted from the calculation unit 12, the transmission unit 14 extracts the direction toward the terminal 2 from the inputted electric signal. Then, the transmission unit 14 emits the beam in the extracted direction toward the terminal 2 by using the well-known beam forming technology.

The transmission unit 14 is a function unit for realizing "Downlink signal transmission function as in the section (4-5)". Specifically, when the electric signal is inputted from the modulation unit 13, the transmission unit 14 extracts the modulated signal (the downlink signal) from the inputted electric signal. The transmission unit 14 converts the extracted signal (the downlink signal) into a wireless signal and transmits it by the emitted beam (the radio wave in 10 GHz band).

(7) About means for realizing each unit

The above-mentioned IF (Interface) unit 10 can be realized by using an electronic circuit. The control unit 11 and the calculation unit 12 can be realized by using a RAM (Random Access Memory) and an arithmetic processing device such as a CPU (Central Processing Unit) or the like. The modulation unit 13 can be realized by using an electronic circuit, an FPGA (Field-Programmable Gate Array), or a DSP (Digital Signal Processor). The transmission unit 14 can be realized by using a plurality of high-frequency circuits, an electronic circuit, and a multiplexer. The electronic circuit of the transmission unit 14 is a common circuit for performing control so that the beam emitted from the high-frequency circuit is directed to the inputted direction like a pre-coding weight generation unit or a pre-coding multiplication unit shown in Fig. 7 of patent literature 2.

[Explanation of operation]

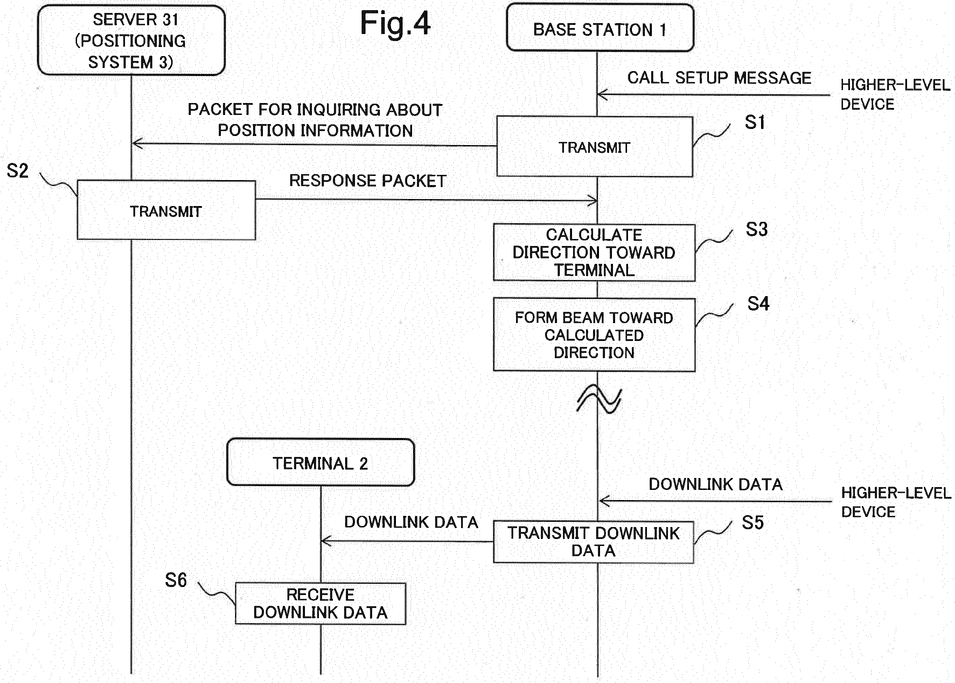

Fig. 4 is a figure for explaining operation of the base station 1 according to this example embodiment. The operation of the base station 1 according to this example embodiment will be described in detail below by using Fig. 4. Explanation will be made based on an assumption that the positioning system 3 stores the position information (X2, Y2) of the terminal 2 as explained in the above-described section "(2-1) Positioning function".

(1) Inquiry process

First, it is assumed that as shown in Fig. 4, the base station 1 according to this example embodiment receives the call setup message that instructs the base station 1 to communicate with the terminal 2 from the higher-level device 5. The above-mentioned call setup message may be, for example, Initial Context Setup.

When the base station 1 according to this example embodiment receives the call setup message, the base station 1 transmits the packet for inquiring about the position information (of the terminal 2) to the server 31 of the positioning system 3 (S1).

The process S1 is realized by the control unit 11 of the base station 1. Specifically, when the control unit 11 of the base station 1 receives the call setup message via the IF unit 10, the control unit 11 transmits the packet for inquiring about the position information to the server 31 via the IF unit 10. The packet for inquiring about the position information is a packet addressed to the server 31.

Next, when the server 31 receives the packet for inquiring about the position information from the base station 1, the server 31 transmits the stored position information (X2, Y2) of the terminal 2 to the base station 1 as the response packet (S2).

(2) Process for calculating the direction toward the terminal 2

Next, when the base station 1 according to this example embodiment receives the response packet, the base station 1 extracts the position information of the terminal 2 included in the received response packet and calculates the direction toward the terminal 2 on the basis of the extracted position information (X2, Y2) of the terminal 2 and the stored position information (X1, Y1) of the own device (S3).

The above-mentioned process S3 is realized by the control unit 11 and the calculation unit 12 of the base station 1. Namely, the control unit 11 extracts the position information (X2, Y2) of the terminal 2 from the response packet received via the IF unit 10 and outputs the extracted position information (X2, Y2) of the terminal 2 to the calculation unit 12 as an electric signal. The calculation unit 12 calculates the direction toward the terminal 2 by using the inputted electric signals, in other words, the position information (X2, Y2) of the terminal 2 and the position information (X1, Y1) of the base station 1.

(2-1) Specific operation for calculating the direction toward the terminal 2

Specifically, the process for calculating the direction toward the terminal 2 may be a process in which a well-known DoA is calculated on the basis of the position information (X2, Y2) of the terminal 2 extracted by the calculation unit 12 and the position information (X1, Y1) of the base station 1 as the direction of the terminal 2.

The DoA stands for Direction of Arrival. As shown in Fig. 3, the DoA is an angle between an antenna front direction (a Y-axis direction that is a direction perpendicular to a radio wave radiation plane) and the direction toward the terminal 2. Because the common beam forming technology is a technology for emitting a beam in a direction corresponding to an angle DoA, the DoA is calculated. The calculation unit 12 can calculate the DoA by the following equation 1. A range of the DoA is from -90 degrees to +90 degrees.

$$DoA = \arctan\left\{(X2 - X1)\diagup(Y2 - Y1)\right\} \quad \cdot\cdot(式1 \quad )$$

Further, when a value of (Y2 - Y1) is equal to or greater than zero, the calculation unit 12 calculates the DoA by equation 1. This is because when the value of (Y2 - Y1) is equal to or greater than zero, the terminal 2 is located in front of the antenna (in the direction in which the radio wave radiation plane is facing) and the base station 1 can emit the beam to the terminal 2. When the value of (Y2 - Y1) is negative, the terminal 2 is located in back of the antenna (in the direction opposite to the direction in which the radio wave radiation plane is facing) and the base station 1 cannot emit the beam in this direction. When the value of (Y2 - Y1) is negative, the calculation unit 12 does not calculate the DoA and outputs an electric signal indicating that the beam cannot be emitted to the control unit 11. The control unit 11 transmits the packet indicating that the beam cannot be emitted to the higher-level device 5 via the IF unit 10.

In the following explanation, it is assumed that the terminal 2 is located in a direction offset from the antenna front direction by +30 degrees and the calculation unit 12 calculates the DoA of +30 degrees by substituting the position information (X2, Y2) of the terminal 2 and the position information (X1, Y1) of the base station 1 in equation 1.

(3) Process for emitting a beam

Next, after performing the process S3, the base station 1 according to this example embodiment emits the beam in the direction toward the terminal 2, specifically, in the direction corresponding to the calculated angle DoA (+30 degrees), by using the well-known beam forming technology (S4).

The above-mentioned process S4 is realized by the calculation unit 12 and the transmission unit 14. Namely, the calculation unit 12 outputs the calculated DoA (+30 degrees) to the transmission unit 14 as an electric signal and the transmission unit 14 extracts the DoA (+30 degrees) from the inputted electric signal. The transmission unit 14 emits the beam in the direction corresponding to the extracted DoA (+30 degrees) by using the well-known beam forming technology.

The base station 1 according to this example embodiment can direct the beam in the direction toward the terminal 2.

(4) Process for transmitting the downlink signal

Next, after performing the process S4, when the downlink signal is inputted from a higher-level device 4, the base station 1 according to this example embodiment converts the inputted downlink data signal into a wireless signal and transmits it by the emitted beam (that is, a radio wave in 10 GHz band) (S5).

The above-mentioned process S5 is realized by the IF unit 10, the control unit 11, the modulation unit 13, and the transmission unit 14. Namely, the control unit 11 outputs the downlink signal received from the higher-level device 4 via the IF unit 10 to the modulation unit 13 as an electric signal, and the modulation unit 13 performs a modulation process to the inputted electric signal (the downlink signal). The modulation process is a process for converting the inputted electric signal (the downlink signal) into a 64 QAM modulated signal. The modulation unit 13 outputs the 64 QAM modulated signal to the transmission unit 14 as an electric signal, and the transmission unit 14 extracts the 64 QAM modulated signal from the inputted electric signal. The transmission unit 14 converts the extracted 64 QAM modulated signal into a wireless signal and transmits the wireless signal by the beam (the radio wave in 10 GHz band).

Because the beam is directed toward the terminal 2, the downlink signal is also transmitted toward the terminal 2. The downlink signal may be downlink U-plane data.

Next, after performing the process S5, the terminal 2 extracts the downlink signal from the beam (the radio wave in 10 GHz band) by a common wireless function and receives the downlink signal (S6). The downlink signal is received by the terminal 2.

(5) Configuration and operation after addition of an antenna (variations of the configuration and operation, variation 1)

In the above-mentioned configuration, the transmission unit 14 of the base station 1 includes the antenna which the radio wave radiation plane is facing to the Y axis direction. However, the transmission unit 14 may further include another antenna (hereinafter, referred to as a "complementary antenna") which the radio wave radiation plane is facing to the opposite direction to the Y axis direction. The base station 1 can emit the beam omnidirectionally. When the complementary antenna is used, the base station 1 performs the following operation.

(5-1) Operation of the base station 1 after addition of the antenna

First, after the calculation unit 12 of the base station 1 extracts the position information (X2, Y2) of the terminal 2 from the response packet in the above-mentioned process S3, the calculation unit 12 determines whether a value of (Y2 - Y1) is a negative value. When the value of (Y2 - Y1) is equal to or greater than 0, the calculation unit 12 of the base station 1 calculates the DoA by equation 1 and performs the above-mentioned processes S4 to S6.

When the value of (Y2 - Y1) is a negative value, first, the calculation unit 12 of the base station 1 calculates the DoA by the above-mentioned equation 1. Here, the calculated DoA is the DoA of the complementary antenna. After the calculation unit 12 of the base station 1 calculates the DoA of the complementary antenna, the calculation unit 12 outputs a calculated DoA value and a predetermined number indicating the complementary antenna to the transmission unit 14 as an electric signal. The predetermined number is set to the calculation unit 12 by an administrator of the mobile communication system in advance. When the transmission unit 14 extracts the DoA value and the number indicating the complementary antenna from the inputted electric signal, the transmission unit 14 emits the beam in the direction corresponding to the extracted angle DoA from the complementary antenna by using the well-known beam forming technology. When the downlink signal is inputted, the transmission unit 14 performs the process S5 and transmits the inputted downlink signal by the beam emitted from the complementary antenna.

(6) Configuration and operation for emitting the beam toward a plurality of terminals (variations of the configuration and operation, variation 2)

The number of the terminals is not limited to one. The base station 1 according to this example embodiment may emit the beam toward each of a plurality of the terminals (for example, the terminals 2, 12, and 22). When the base station 1 emits the beam toward a plurality of the terminals, the base station 1, the positioning system 3, and the terminals 2, 12, and 22 perform the operation described in the following sections (6 - 1) to (6 - 3).

(6-1) Operation (operation for storing the position information of each terminal) of the positioning system 3

First, each of the terminals 2, 12, and 22 transmits the response signal including a predetermined terminal ID that is an identifier for identifying each terminal. A telephone number of the terminals 2, 12, and 22 may be used as the terminal ID. Whenever the fixed stations 30_1, 30_2, ..., and 30_n of the positioning system 3 receive the response signal, the fixed stations 30_1, 30_2, ..., and 30_n calculate the distance between the fixed station and the terminal and outputs the calculated distance to the server 31. In this case, the fixed stations 30_1, 30_2, ..., and 30_n output the calculated distance, together with the terminal ID included in the response signal, to the server 31. When the distance and the terminal ID are inputted from the fixed stations 30_1, 30_2, ..., and 30_n, the server 31 stores them, calculates the positional coordinates for each terminal ID after the elapse of a predetermined time, stores the calculated positional coordinates in association with the terminal ID. The predetermined time is set to the server 31 by an administrator of the positioning system 3.

(6-2) Operation (Operation for emitting the beam toward each of the terminals) of the base station 1

(6-2-1) Operation for acquiring the position information of each terminal

In order to acquire the position information of each terminal, the base station 1 transmits the packet for inquiring about the position information in which the terminal ID of each terminal is included. The terminal ID of each terminal may be set to the base station 1 by an administrator of the base station 1. Alternatively, when the terminal ID is included in the call setup message, the base station 1 may extract the terminal ID from the message whenever the call setup message is received and transmit the packet for inquiring about the position information in which the extracted terminal ID is included.

When the positioning system 3 receives the packet for inquiring about the position information, the positioning system 3 extracts the terminal ID (of each terminal) from the packet for inquiring about the position information, includes the positional coordinates of the terminal corresponding to the extracted terminal ID in the response packet, and transmits the response packet to the base station 1. Whenever the base station 1 receives the response packet, the base station 1 performs the process S3 and calculates the direction toward each terminal (that is, the DoA). The above-mentioned operation performed by the base station 1 may be performed by the control unit 11.

(6-2-2) Operation for emitting the beam for each of the terminals

The base station 1 emits the beam in the direction toward each terminal by performing the process S4 for each of the calculated directions toward the terminals (DoAs). In this case, the base station 1 may emit the beam in one of the calculated directions toward the terminals at a predetermined time interval (for example, 5 seconds) instead of simultaneously emitting the beams in each of the directions toward the terminals. Specifically, the base station 1 may perform the following processes (process I) to (process IV).

(Process I) The base station 1 selects one direction toward the terminal from among the calculated directions toward the terminals (DoAs) and emits the beam in the selected direction toward the terminal by performing the process S4.

(Process II) Next, when the predetermined time elapses, the base station 1 stops emitting the beam and newly selects another direction (that has not yet been selected) toward the terminal among the calculated directions toward the terminals (DoAs).

(Process III) Next, the base station 1 emits the beam in the newly selected direction toward the terminal by performing the process S4.

(Process IV) The base station 1 repeats the (process II) and the (process III) until all the calculated directions toward the terminals (DoAs) have been selected. When the base station 1 has selected all the calculated directions toward the terminals (DoAs), the base station 1 repeats the processes (process I) to (process IV) until the predetermined process finish time passes. When the process finish time comes, the base station 1 ends the process.

The above-mentioned operation of the base station 1 may be performed by the transmission unit 14. The above-mentioned predetermined time and the process finish time are set to the transmission unit 14 by the administrator of the base station 1.

(6-3) Supplementation about beam emission

Further, the base station 1 may simultaneously emit the beams in a plurality of the directions toward the terminals (DoAs). In this case, the base station 1 emits the beams by using a well-known Massive MIMO (Muliple Input Multiple Output) technology.

The Massive MIMO technology is a technology in which the beams are simultaneously transmitted to a plurality of the terminals by using 100 or more many array antennas. In a common base station (for example, a base station described in patent literature 2 or the like) using the Massive MIMO technology, 100 or more array antennas are divided into a plurality of antenna groups and the beam is emitted in the arrival direction of the uplink signal for each antenna group. The common base station using the Massive MIMO technology can simultaneously emit the beams in each of the arrival directions (the directions toward the terminals).

The base station 1 according to this example embodiment may regard the each of calculated directions toward the terminals as the arrival directions and simultaneously emit the beams in the directions toward the terminals from each of the antenna groups by using the Massive MIMO technology.

(7) About the number of the base stations 1 and a place of installation

The mobile communication system including the base station 1 according to this example embodiment may include a plurality of the base stations 1 instead of including one base station 1. Further, the base station 1 according to this example embodiment uses the radio wave in 10 GHz band that has a property of strongly going straight ahead. Therefore, it is desirable that the base station 1 is installed in an open space that there is no obstacle around the base station 1 as much as possible. This is similar to a case of a small cell base station of a common phantom cell. The open space is for example, an open area, a concert hall, a soccer stadium, or the like.

[Explanation of advantageous Effects]

By using this example embodiment, when the base station exclusive for transmission which does not receive the uplink signal transmits the downlink signal by using the beam, the base station exclusive for transmission can deliver the downlink signal to the terminal.

This is because the base station according to this example embodiment acquires the position information of the terminal from the positioning system (instead of estimating the arrival direction of the uplink signal) and calculates the direction toward the terminal. As a result, the base station according to this example embodiment can direct the beam having a property of going straight ahead in the direction toward the terminal and deliver the downlink signal to the terminal.

<<Second example embodiment>>

Next, a second example embodiment of the present invention will be described.

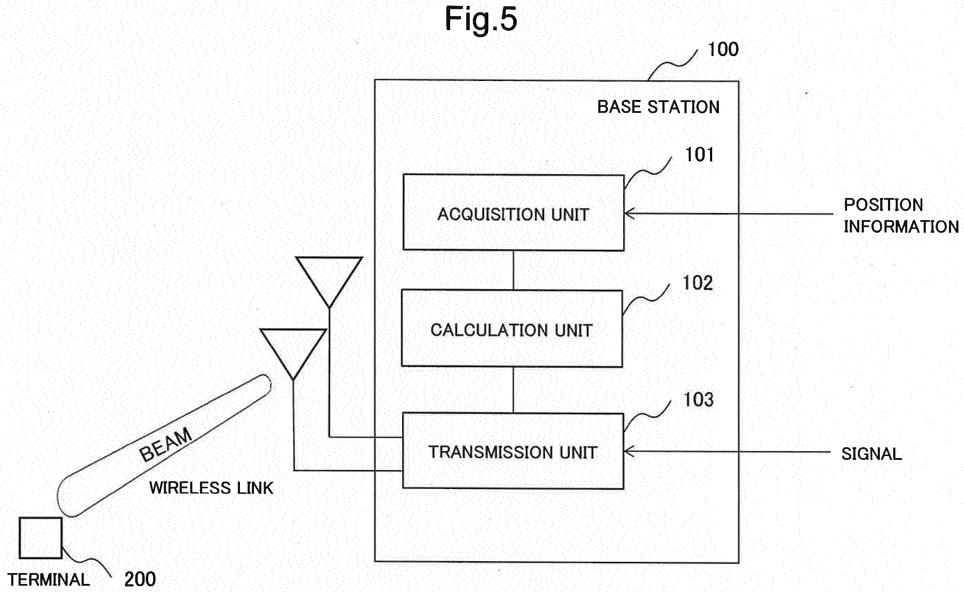

Fig. 5 is a figure showing an example of a configuration of a base station according to the second example embodiment of the present invention. The configuration and operation of the base station according to the second example embodiment will be described below.

[Explanation of the configuration]

(1) Configuration of the base station according to the second example embodiment

As shown in Fig. 5, a base station 100 according to the second example embodiment includes an acquisition unit 101, a calculation unit 102, and a transmission unit 103. The calculation unit 102 is connected to the acquisition unit 101 and the transmission unit 103.
The base station 100 is connected to a terminal 200 via a wireless link. The terminal 200 is a common terminal.
The function of the function of each unit of the base station 100 will be described below.

(3) Function of each unit of the base station 100

First, the acquisition unit 101 of the base station 100 acquires the position information indicating the position of the connected terminal 200. The acquisition unit 101 may be connected to a well-known positioning system which measures the position of the terminal 200 and acquire the "position information indicating the position of the terminal 200" from the connected positioning system.
The calculation unit 102 of the base station 100 calculates the direction toward the terminal 200 from the own device (the base station 100) on the basis of the "position information indicating the position of the terminal 200" acquired by the acquisition unit 101 and the predetermined position information indicating the position of the own device (in other words, the position information indicating the position of the base station 100).
The above-mentioned "position information indicating the position of the base station 100" is set by the administrator of the base station 100. The administrator of the base station 100 may set the positional coordinates of the base station 100 in the well-known positioning system to the calculation unit 102.
The transmission unit 103 of the base station 100 emits the beam having a property of going straight ahead in the direction calculated by the calculation unit 102 and transmits the inputted signal by the above-mentioned beam.
For this purpose, the transmission unit 103 may include a directional antenna (for example, an array antenna) and emit the beam having a property of going straight ahead in the direction calculated by the calculation unit 102 from the directional antenna by using the beam forming technology. The beam having a property of going straight ahead may be a beam in 10 GHz band.

[Explanation of operation]

Next, the operation of the base station 100 according to this example embodiment will be described.
First, after the acquisition unit 101 of the base station 100 is activated, the acquisition unit 101 acquires the position information indicating the position of the connected terminal 200.
For example, the acquisition unit 101 may access the positioning system which measures the position of the terminal 200 and acquire the position information indicating the position of the terminal 200 from the positioning system.
Next, the calculation unit 102 of the base station 100 calculates the direction toward the terminal 200 from the base station 100 on the basis of the "position information indicating the position of the terminal 200" acquired by the acquisition unit 101 and the predetermined position information indicating the position of the base station 100.
In this case, the calculation unit 102 may calculate the direction toward the terminal 200 as an angle. Specifically, the calculation unit 102 may calculate the direction toward the terminal 200 as an angle with respect to the direction perpendicular to the radiation plane of the directional antenna.
Next, the transmission unit 103 of the base station 100 emits the beam having a property of going straight ahead in the direction calculated by the calculation unit 102.
In this case, the transmission unit 103 of the base station 100 may emit the beam having a property of going straight ahead to the angle calculated by the calculation unit 102 from the directional antenna by using the well-known beam forming technology.
Further, if the directional antenna is placed on a turn-table for emitting the beam, the transmission unit 103 may turn the turn-table until the directional antenna faces to the calculated angle without using the beam forming technology. In this case, a correspondence table in which the angle with respect to the direction perpendicular to the radiation plane of the directional antenna and a rotation time to become the above-mentioned angle are associated with each other is set to the transmission unit 103 by the administrator of the base station 100 in advance. The transmission unit 103 obtains the rotation time corresponding to the calculated angle from the correspondence table and turns the turn-table during the obtained rotation time. The turn-table turns in one direction when an electric current is inputted and the transmission unit 103 inputs the electric current in the turn-table during the obtained rotation time. When the turn-table turns by the calculated angle, the transmission unit 103 emits the beam and emits the beam in the direction toward the terminal 200.

Next, when the signal is inputted, the transmission unit 103 of the base station 100 transmits the inputted signal by the beam.

[Explanation of the effect]

According to this example embodiment, when the signal is transmitted by the beam, the base station can deliver the signal to the terminal.

This is because the base station according to this example embodiment acquires the position information of the terminal and calculates the direction toward the terminal. As a result, the base station according to this example embodiment can direct the beam having a property of going straight ahead in the direction toward the terminal and deliver the signal to the terminal.

Further, even when the base station according to this example embodiment does not receive a signal from the terminal and thereby cannot estimate the arrival direction of the reception signal, the base station can deliver the signal to the terminal. This is because, as described above, the base station according to this example embodiment acquires the position information of the terminal and calculates the direction toward the terminal from the position information. As a result, the base station according to this example embodiment can emit the beam having a property of going straight ahead in the direction toward the terminal and deliver the signal to the terminal.

The whole or part of the example embodiments disclosed above can be described as, but not limited to, the following supplementary notes.

(Supplementary Note 1)

A base station comprising:

acquisition means for acquiring position information indicating a position of a connected terminal,
calculation means for calculating a direction toward the terminal from an own device based on the position information indicating the position of the terminal and predetermined position information indicating the position of the own device, and
transmission means for emitting a beam having a property of going straight ahead in the direction and transmitting an inputted signal by the beam.

(Supplementary Note 2)

The base station according to Supplementary Note 1, wherein
the transmission means includes a directional antenna and emit the beam from the directional antenna.

(Supplementary Note 3)

The base station according to Supplementary Note 2, wherein
the calculation means calculates an angle between a direction perpendicular to a radiation plane of the directional antenna and the direction toward the terminal, and
the transmission means emits the beam to the angle.

(Supplementary Note 4)

The base station according to Supplementary Note 3, wherein
the transmission means emits the beam by using a beam forming technology.

(Supplementary Note 5)

The base station according to Supplementary Note 4, wherein

the transmission means emits the beam by using a Massive MIMO (Multi Input Multi Output) technology.

(Supplementary Note 6)

The base station according to any one of Supplementary Notes 1 to 5, wherein
the acquisition means acquires the position information indicating the position of the terminal from a connected positioning system.

(Supplementary Note 7)

A method comprising:

acquiring position information indicating a position of a connected terminal,
calculating a direction toward the terminal from an own device based on the position information indicating the position of the terminal and predetermined position information indicating the position of the own device, and
emitting a beam having a property of going straight ahead in the direction and transmitting an inputted signal by the beam.

(Supplementary Note 8)

The method according to Supplementary Note 7, wherein
at the time of the transmission, the beam is emitted from a directional antenna included in the own device.

(Supplementary Note 9)

The method according to Supplementary Note 8, wherein
at the time of the calculation, an angle between a direction perpendicular to a radiation plane of the directional antenna and the direction toward the terminal is calculated and
at the time of the transmission, the beam is emitted to the angle.

(Supplementary Note 10)

The method according to Supplementary Note 9, wherein
at the time of the transmission, the beam is emitted by using a beam forming technology.

(Supplementary Note 11)

The method according to Supplementary Note 10, wherein
at the time of the transmission, the beam is emitted by using a Massive MIMO (Multi Input Multi Output) technology.

(Supplementary Note 12)

The method according to any one of Supplementary Notes 7 to 11, wherein
at the time of the calculation, the position information indicating the position of the terminal is acquired from a connected positioning system.
While the invention has been particularly shown and described with reference to example embodiments thereof, the invention is not limited to these embodiments. It will be understood by those of ordinary skill in the art that various changes in form and details may be made therein without departing from the spirit and scope of the present invention as defined by the claims.
This application is based upon and claims the benefit of priority from Japanese Patent Application No. 2015-142795 filed on July 17, 2015, the disclosure of which is incorporated herein in its entirety by reference.

[Reference signs List]

1, 4, and 100 base station
2 and 200 terminal

3 positioning system
5 higher-level device
10 IF unit
11 control unit
12 and 102 calculation unit
13 modulation unit
14 and 103 transmission unit
30 _1 fixed station
31 server
101 acquisition unit

**Claims**

1. A base station comprising:

   acquisition means for acquiring position information indicating a position of a connected terminal,
   calculation means for calculating a direction toward the terminal from an own device based on the position information indicating the position of the terminal and predetermined position information indicating the position of the own device, and
   transmission means for emitting a beam having a property of going straight ahead in the direction and transmitting an inputted signal by the beam.

2. The base station according to claim 1, wherein
   the transmission means includes a directional antenna and emit the beam from the directional antenna.

3. The base station according to claim 2, wherein
   the calculation means calculates an angle between a direction perpendicular to a radiation plane of the directional antenna and the direction toward the terminal, and
   the transmission means emits the beam to the angle.

4. The base station according to claim 3, wherein
   the transmission means emits the beam by using a beam forming technology.

5. The base station according to claim 4, wherein
   the transmission means emits the beam by using a Massive MIMO (Multi Input Multi Output) technology.

6. The base station according to any one of claims 1 to 5, wherein the acquisition means acquires the position information indicating the position of the terminal from a connected positioning system.

7. A method comprising:

   acquiring position information indicating a position of a connected terminal,
   calculating a direction toward the terminal from an own device based on the position information indicating the position of the terminal and predetermined position information indicating the position of the own device, and
   emitting a beam having a property of going straight ahead in the direction and transmitting an inputted signal by the beam.

8. The method according to claim 7, wherein
   at the time of the transmission, the beam is emitted from a directional antenna included in the own device.

9. The method according to claim 8, wherein
   at the time of the calculation, an angle between a direction perpendicular to a radiation plane of the directional antenna and the direction toward the terminal is calculated and
   at the time of the transmission, the beam is emitted to the angle.

10. The method according to claim 9, wherein
    at the time of the transmission, the beam is emitted by using a beam forming technology.

**11.** The method according to claim 10, wherein
at the time of the transmission, the beam is emitted by using a Massive MIMO (Multi Input Multi Output) technology.

**12.** The method according to any one of claims 7 to 11, wherein
at the time of the calculation, the position information indicating the position of the terminal is acquired from a connected positioning system.

# Fig.1

Fig.2

POSITIONING SYSTEM 3

30_1 30_2 30_n

... 31

PULSE SIGNAL SERVER

RESPONSE SIGNAL

BEAM (HIGH FREQUENCY RADIO)

DOWNLINK DATA SIGNAL

2(TERMINAL)

BASE STATION 1

CALCU-LATION UNIT 12

TRANS-MISSION UNIT 14

MODU-LATION UNIT 13

CONTROL UNIT 11

IF UNIT 10

ROUTER

DOWNLINK SIGNAL

HIGHER-LEVEL DEVICE 4

EP 3 327 952 A1

# Fig.3

Y AXIS

DIRECTION TOWARD TERMINAL
(DIRECTION TOWARD POSITION (X2, Y2))

DoA

RADIO WAVE RADIATION PLANE

POSITION
(X1, Y1)

X AXIS

REGULAR
INTERVAL

REGULAR
INTERVAL

REGULAR
INTERVAL

ANTENNA

EP 3 327 952 A1

# Fig.4

SERVER 31
(POSITIONING
SYSTEM 3)

BASE STATION 1

CALL SETUP MESSAGE ← HIGHER-LEVEL DEVICE

PACKET FOR INQUIRING ABOUT POSITION INFORMATION ← TRANSMIT    S1

S2 → TRANSMIT — RESPONSE PACKET →

CALCULATE DIRECTION TOWARD TERMINAL    S3

FORM BEAM TOWARD CALCULATED DIRECTION    S4

TERMINAL 2

DOWNLINK DATA ← HIGHER-LEVEL DEVICE

DOWNLINK DATA ← TRANSMIT DOWNLINK DATA    S5

S6 → RECEIVE DOWNLINK DATA

EP 3 327 952 A1

# Fig.5

## INTERNATIONAL SEARCH REPORT

| International application No. |
| --- |
| PCT/JP2016/003340 |

**A. CLASSIFICATION OF SUBJECT MATTER**
*H04B7/10*(2006.01)i, *H04W16/28*(2009.01)i, *H04W64/00*(2009.01)i

According to International Patent Classification (IPC) or to both national classification and IPC

**B. FIELDS SEARCHED**

Minimum documentation searched (classification system followed by classification symbols)
H04B7/10, H04W16/28, H04W64/00

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2001-102979 A (Toshiba Corp.), 13 April 2001 (13.04.2001), paragraph [0055] (Family: none) | 1-12 |
| X | US 2012/0151207 A1 (Zhao et al.), 14 July 2012 (14.07.2012), paragraphs [0044] to [0049]; fig. 6 & WO 2011/023005 A1  & EP 2475201 A1 & CN 102006592 A | 1-12 |
| X | US 2009/0247173 A1 (Rosmann et al.), 01 October 2009 (01.10.2009), paragraph [0034]; fig. 5, 7 & US 2012/0303757 A1  & US 2013/0281103 A1 | 1-12 |

☐ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 20 September 2016 (20.09.16) | 27 September 2016 (27.09.16) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (January 2015)

**EP 3 327 952 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001127699 A
- JP 2015109692 A
- JP 2015142795 A

**Non-patent literature cited in the description**

- **NTT DOCOMO INC.** *DoCoMo 5G white paper,* September 2014, https://www.nttdocomo.co.jp/binary/pdf/corporate/technology/whitepaper_5g/DOCOMO_5G_White_PaperJP_20141006.pdf >
- Development of highly accurate indoor positioning system using UWB. Independent Administrative Agency National Institute of Information and Communications Technology, 26 May 2014